Europäisches Patentamt
European Patent Office
Office européen des brevets

(11) Publication number: **0 319 881 A2**

# EUROPEAN PATENT APPLICATION

(21) Application number: 88120235.2

(22) Date of filing: 03.12.88

(30) Priority: 11.12.87 JP 312356/87
02.04.88 JP 80257/88

(43) Date of publication of application:
14.06.89 Bulletin 89/24

(84) Designated Contracting States:
BE CH DE FR GB IT LI NL SE

(51) Int. Cl.4: C09K 11/06 , H05B 33/14

(71) Applicant: IDEMITSU KOSAN COMPANY LIMITED
No. 1-1, 3-chome, Marunouchi Chiyoda-ku
Tokyo(JP)

(72) Inventor: Hosokawa, Chishio c/o Idemitsu Kosan Co., Ltd.
1280, Kamiizumi, Sodegaura-machi
Kimitsu-gun Chiba-ken(JP)
Inventor: Kusumoto, Tadashi c/o Idemitsu Kosan Co., Ltd.
1280, Kamiizumi, Sodegaura-machi
Kimitsu-gun Chiba-ken(JP)

(74) Representative: Türk, Dietmar, Dr. rer. nat.
Türk, Gille + Hrabal Patentanwälte Bruckner Strasse 20
D-4000 Düsseldorf 13(DE)

## (54) Electroluminescence element.

(57) An electroluminescence (EL) element in which an emitting material is made of an organic compound represented by general formula (I) :

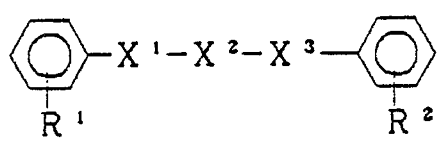

..... (I)

is disclosed. A method for using the organic compound represented by general formula (I) as an emitting material for an EL element, and a thin film EL element in which a thin film of the above organic compound is sandwiched between two electrodes, at least one of which is transparent or semitransparent are also disclosed.

According to the EL element, a high brightness can be obtained by only application of a low voltage. The element is in a simplified structure.

Figure

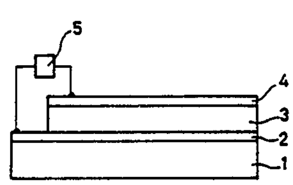




Xerox Copy Centre

# ELECTROLUMINESCENCE ELEMENT

## BACKGROUND OF THE INVENTION

### 1. Field of the Invention

The present invention relates to an electroluminescence element, and more particularly to an electroluminescence element to be used as an emitting material or luminous material for various display devices and a method of using a specified organic compound as an emitting material or luminous material of an electroluminescence element.

### 2. Detailed Description of the Related Arts

An electroluminescence element (hereinafter referred to as an "EL element") has high distinguishability because it emits light therefrom, and has impact durability because it is a complete solid element. An EL element using ZnS: Mn, which is an inorganic phosphor, has been widely used. Such inorganic EL elements, however, need an applied voltage as high as about 200 V to emit light. Therefore, the driving method is complicated. In these circumstances, organic thin film EL elements using various materials are now under investigation because they permit greatly reduced applied voltages. Vincett et al. produced an EL element using a vacuum deposited film (luminescent film) of anthracene having a film thickness of about 0.6 µm, as an emitting material, and obtained a blue visible light which is distinguishable under normal illumination at an applied voltage of 30 V (Thin Solid Films, 94 (1982), 171). This element, however, is unsatisfactory in luminescent brightness and needs a high applied voltage. Moreover, in this element, it is necessary to maintain the substrate temperature at about -50 °C at the time of forming an electrode by vacuum deposition in order to prevent sublimation of the anthracene and to prevent the luminescent film from being damaged. If the substrate temperature is maintained at about room temperature, the film surface temperature rises at the time of vacuum deposition of an electrode and the luminescent film is thereby damaged and problems such as formation of short circuits between electrodes are likely to occur.

In recent years, an organic EL element emitting light with a brightness of 5 to 90 cd/$m^2$ upon application of a low voltage of about 10 V has been produced by the LB method (Langumuir-Blodgett method) (Japanese Patent Application Laid-Open Nos. 43682/1986 to 63691/1986).

In this organic EL element, a multi-layer film, which is composed of luminous materials having electron donating and electron accepting properties, is formed by the accumulation of a monomolecular film according to the LB method and, therefore, it has problems in that the structure is complicated, the production process is also complicated and troublesome, and the element is unsuitable for practical use.

The long chain alkyl group to be used in the monomolecular layer according to the LB method has a low heat resistant temperature of about 100 °C (Kobunshi Gakkaishi, 36 1987),267). Therefore, the multi-layer film of the EL element using the LB method is damaged at the time of vacuum deposition of the opposite electrode unless special techniques such as polymerization of the monomolecule and so forth are employed. Thus the production yield of the element is seriously decreased.

An organic EL element displaying high brightness upon application of a low voltage of less than 25 V, has also been developed (Japanese Patent Application Laid-Open No.194393/1984). This element is a multi-layer type of electrode/positive hole injection layer/emitting layer/electrode, in which the film thickness between electrodes is necessary to be less than 0.5 µm. Thus, pinholes are readily formed and a serious problem arises in that productivity is low.

## SUMMARY OF THE INVENTION

An object of the present invention is to provide an EL element emitting light with high brightness upon application of a low voltage.

Another object of the present invention is to provide an EL element which is simple in structure and can be easily produced with a high production yield, i.e., a low rejection rate.

Still another object of the present invention is to provide a useful organic compound emitting light of high brightness as an emitting material or luminous material for an EL element.

The present invention relates to an EL element in which an emitting material is made of an organic compound represented by general formula (I) :

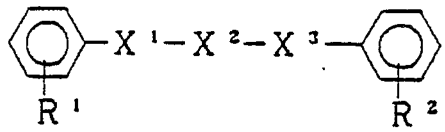

..... (I)

wherein $R^1$ and $R^2$ are independently a hydrogen or an alkyl group having 1 to 4 carbon atoms, and $X^1$, $X^2$ and $X^3$ are independently -C=C- or

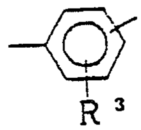

(wherein $R^3$ is a hydrogen or an alkyl group having 1 to 4 carbon atoms).

The present invention relates to a method for using an organic compound of general formula (I) as an emitting material for an EL element.

The present invention further relates to a thin film EL element in which a thin film of an organic compound represented by general formula (I) is sandwiched between two electrodes, at least one of which is transparent or semitransparent.

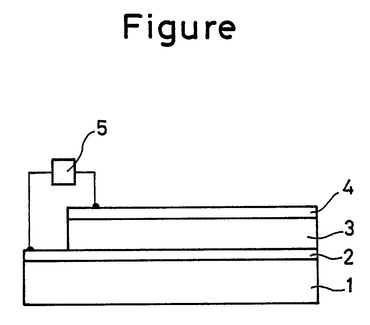

## BRIEF DESCRIPTION OF THE DRAWING

The Figure is a schematic cross-sectional view illustrating an embodiment of the EL element of the present invention.

## DESCRIPTION OF PREFERRED EMBODIMENTS

Organic compounds to be used as the emitting or luminous material in the present invention are represented by the above general formula (I), which are commonly referred to as polyphenyl, polyene or stilbene-based dyes. These compounds can be synthesized by the Wittig method. Representative examples of compounds in which all of $R^1$, $R^2$ and $R^3$ are hydrogen atoms, among the compounds represented by general formula (I) are shown below.

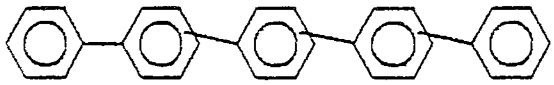,

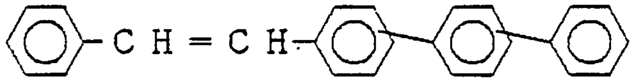,

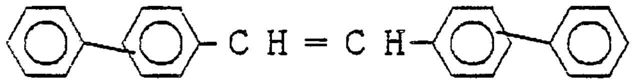,

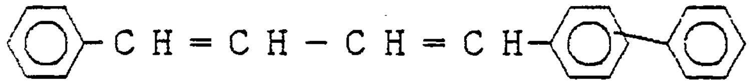,

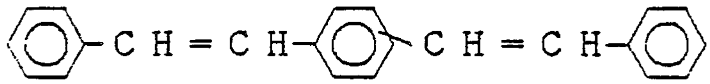,

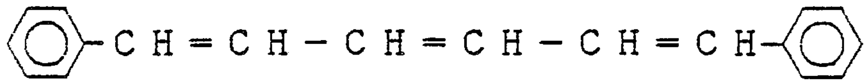

The phenylene group, i.e., a group represented by the formula:

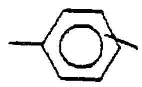

in the above formulae may be any of a p-phenylene group, a m-phenylene group and an o-phenylene group, and is preferably a p-phenylene group. Of the compounds represented by the general formula (I), compounds with a stilbene ring are preferred. Particularly preferred are trans-4,4′-diphenylstilbene and 1,4-distyryl-benzene.

When $R^1$ and $R^2$ of general formula (I) are alkyl groups having 1 to 4 carbon atoms (which may be hydrogen atoms), 1,4-bis(alkylstyryl)benzene derivatives represented by the general formula (I′):

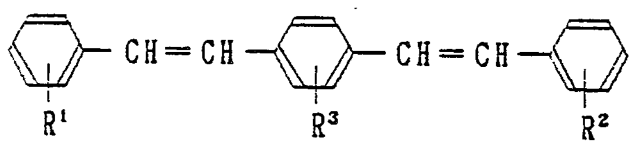 ..... (I')

are preferred. $R^1$ and $R^2$ in the above general formula (I′) may be identical or different and are each an alkyl group having 1 to 4 carbon atoms, e.g., a methyl group, an ethyl group, a n-propyl group, an i-propyl group, a n-butyl group, an i-butyl group, a sec-butyl group and a tert-butyl group, or may be hydrogen atoms. $R^3$ is a hydrogen atom or an alkyl group having 1 to 4 carbon atoms. Representative examples of the 1,4-bis-(alkylstyryl)benzene derivatives represented by the general formula (I′) are 1,4-bis(2-methylstyryl)benzene, 1,4-bis(3-methylstyryl)benzene, 1,4-bis(4-methylstyryl)benzene, distyrylbenzene, 1,4-bis(2-ethylstyryl)-benzene, 1,4-bis(3-ethylstyryl)benzene, 1,4-bis(2-methylstyryl)-2-methylbenzene, and 1,4-bis(2-methyl-styryl)-2-ethylbenzene. Of these compounds, 1,4-bis(2-methylstyryl)benzene having the formula:

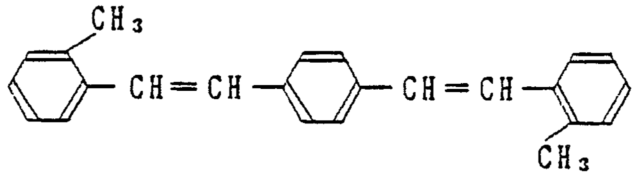

is particularly preferred.

In the present invention, an emitting material comprising the organic compound of general formula (I) is usually used in a form of thin film. The thickness of the film is not critical and can be determined appropriately. The thickness of the film is usually 10 nm to 5 µm, preferably 0.01 to 2.0 µm.

The thin film of the compound represented by general formula (I) can be formed by techniques such as spin coating, vacuum deposition, casting and the LB method. The vacuum deposition method is most preferable in that a film with good uniformity can be obtained and pinholes are less likely to be formed in the film.

Conditions under which the thin film of a compound represented by general formula (I) is formed by the vacuum deposition method vary depending on circumstances and cannot be determined unconditionally. In a preferred embodiment of the present invention, temperature for heating the boat is 100 to 400 °C, the substrate temperature is -50 to 300 °C, the pressure is $1x10^{-5}$ to $1x10^{-2}$ Pa, and the deposition rate is 0.1 to 50 nm/sec, and taking into consideration the type of compound of general formula (I), the type of the vacuum deposition system and so forth, optimum conditions are chosen so that the film thickness is within the range of 10 nm to 5 µm.

In the EL element and the method of the present invention, the organic compound can be used in various forms as the emitting material. Preferably the organic compound is used in such a manner that its thin film is sandwiched between two electrodes, at least one of which is transparent or semitransparent.

An organic electroluminescence element (EL element) using a compound of general formula (I) is formed, for example, as shown in the Figure. That is, an electrode 2 in a thin film form of metal, e.g., gold, aluminum, indium, or magnesium, indium tin oxide (indium oxide doped with tin oxide; ITO), tin oxide ($SnO_2$). zinc oxide (ZnO), copper iodide (CuI) and the like is prepared in a thickness of 10 to 1,000 nm, for example, by the sputtering method, on a supporting substrate 1 made of glass, plastics or quartz. Particularly when the thin film is intended to be transparent or semitransparent, it is formed in a thickness of 10 to 50 nm in order to ensure its transparency. Then an emitting material 3 of a compound of general formula (I) is formed in a thin film form. An electrode 4 is formed on the emitting material 3, so that the emitting material 3 is sandwiched between electrode 2 on supporting substrate 1 and electrode 4. It is preferred that at lease one of the electrodes 2 and 4 be transparent or semitransparent so as to allow light to pass therethrough. When electrode 2 is transparent or semitransparent, the supporting substrate 1 should also be transparent or semitransparent.

Electrodes 2 and 4 are each connected to an electric power supply 5, e.g., an electric power supply of 10 to 70 V DC or AC. When a direct current (DC) is to be applied, the positive electrode is connected to a metal or semiconductor with a high work function, e.g., Au, Ni, Pt, $SnO_2$ or CuI, and the negative electrode, to a metal or semiconductor with a low work function, e.g., In, Al, Mg or ITO.

Upon application of voltage from the electric source, the emitting material 3 of the compound of general formula (I) emits blue or green light.

The supporting substrate and the electrode can be formed by usual methods using various materials.

In the present invention, as described above, an organic EL element is produced using a compound of general formula (I) as an emitting material. A high brightness can be obtained by only application of a low voltage. The element is in such a simplified structure that comprises a substrate/an electrode/an emitting body (luminescent film)/an electrode and if necessary, other element, and thus can be easily produced. The emitting body is less subjected to damage because its material is excellent in heat resistance. Moreover, since the film thickness of the emitting body can be made relatively thick, deficiencies such as pinholes and the like can be avoided and thus productivity is increased. The present invention, therefore, provides an EL element for various displays such as for industrial information and cars, which are inexpensive and of high quality.

EXAMPLE 1

Indium tin oxide (ITO) was provided on a 25 mm x 75 mm x 1.1 mm glass substrate in a 50 nm thick film form by the sputtering method to obtain a transparent substrate. This transparent substrate was attached to a substrate holder of a commerically available vacuum deposition system (manufactured by ULVAC Co., Ltd.), and 100 mg of 1,4-bis(2-methylstyryl)benzene was placed in an electrically-heated boat made of molybdenum. The pressure in the vacuum chamber was decreased to $5x10^{-5}$ Pa and the boat was heated to 160° C. Under these conditions, 1,4-bis(2-methylstyryl)benzene was vapor deposited (vacuum deposited) on the transparent substrate at a deposition rate of 1.0 nm/sec to obtain a luminescent film of 0.7 µm in thickness. In this vacuum deposition process, the substrate was at room temperature.

The substrate was taken out of the vacuum chamber. A stainless steel mask was placed on the luminescent film of the substrate, which was then attached to the substrate holder. In the electrically-heated boat made of molybdenum, 200 mg of gold was placed, and the pressure in the vacuum chamber was decreased to $1x10^{-4}$ Pa. Then, the boat was heated to 1,400° C, and finally a 50 nm thick gold electrode was formed on the luminescent film to produce an organic luminescence element (EL element) in the form shown in the Figure.

Upon application of a DC voltage of 20 V to the EL element, a current of 2.0 mA was passed and blue light was emitted. The maximum emission of the blue light was observed at the wavelength of 450 nm, and the brightness was 80 cd/m$^2$.

EXAMPLE 2

ITO was provided on a 25 mm x 75 mm x 1.1 mm glass substrate in a 50 nm thick film form by the vacuum deposition method to obtain a transparent substrate. This transparent substrate was attached to a substrate holder of a commercially available vacuum deposition system (manufactured by ULVAC Co., Ltd.), and 200 mg to 300 mg of trans-4,4′-diphenylstilbene prepared according to the method described in J. Org. Chem. 24, 1246 (1959) was placed in an electrically-heated boat made of molybdenum. The pressure in the vacuum chamber was decreased to 1 x $10^{-4}$ Pa and the boat was heated to 220° C to 240° C. Under these conditions, trans-4-4′-diphenystilbene was vacuum deposited on the transparent substrate at a deposition rate of 2.0 nm/sec to obtain a luminescent film of 0.9 µm in thickness. In this vacuum deposition process, the substrate was at room temperature.

The substrate was taken out of the vacuum chamber. A stainless steel mask was placed on the luminescent film of the substrate, which was then attached to the substrate holder. In the electrically-heated boat, 200 mg of gold was placed, and the pressure in the vacuum chamber was decreased to 2 x $10^{-4}$ Pa. Then, the boat was heated to 1400° C and a 50 nm thick gold electrode was formed on the luminescent film to make a counter electrode.

Since the sublimation temperature (Sublimation temperature under a pressure of 2 x $10^{-4}$ Pa. The same shall apply hereinafter.) and the melting point (Melting point under atmospheric pressure. The same shall apply hereinafter.) of trans-4,4′-diphenylstilbene were 220° C or higher, the luminescent film sustained no damage at the forming of the counter electrode. Accordingly, EL element was produced in a high yield.

Upon application of a DC voltage of 40 V to the EL element, with the gold electrode as the anode and ITO electrode as the cathode, a current of 3.1 mA was passed and pale blue light was emitted. The maximum emission of the pale blue light was observed at the wavelength of 465 nm, and the brightness was 75 cd/m$^2$.

EXAMPLE 3

EL element was produced in the same manner as in Example 2 except that 1,4-distyryl-benzene prepared according to the method described in J. Org.Chem. 24, 1246 (1959) was used as the starting material for the luminescent film, that the temperature of the boat was 240° C to 260° C, and that a luminescent film of 0.7 µm in thickness was produced.

The melting point of 1,4-distyryl-benzene was 268° C to 269° C, and its sublimation temperature was not lower than 240° C, so the luminescent film sustained no damage at the forming of the counter electrode, and EL element was produced in a high yield.

When a DC voltage of 20 V was applied to the EL element in the same as in Example 2, a current of 10 mA was passed and purplish blue light was emitted. The maximum emission of the purplish blue was observed at the wavelength of 420 nm, and the brightness was 80 cd/m$^2$.

EXAMPLE 4

EL element was produced in the same manner as in Example 2 except that 1,6-diphenylhexatriene obtained by purifying a commercially available one (produced by Aldrich Chemical Company, Inc.) to be 99.5 % or higher in purity was used as the starting material for the luminescent film, that the temperature of the boat was 180 °C to 190 °C, and that a luminescent film of 1.3 µm in thickness was produced.

The melting point of 1,6-diphenylhexatriene was 199 °C to 203 °C, and its sublimation temperature was not lower than 180 °C. Accordingly, the luminescent film sustained no damage at the forming of the counter electrode, and EL element was produced in a high yield.

When an AC voltage of 45 V was applied to the EL element, a current of 0.29 mA was passed and greenish blue light was emitted. The maximum emission of the greenish blue light was observed at the wavelength of 447 nm, and the brightness was 1.0 cd/$m^2$.

EXAMPLE 5

ITO was provided on a 25 mm x 75 mm x 1.1 mm glass substrate in a 50 nm thick film form by the vacuum deposition method to obtain a transparent substrate. This transparent substrate was attached to a substrate holder of a commercially available vacuum deposition system (manufactured by ULVAC Co., Ltd.), and 200 mg of 1,4-bis(4-methylstyrtyl)benzene was placed in an electrically-heated boat made of molybdenum. The pressure in the vacuum chamber was decreased to 1 x $10^{-4}$ Pa and the boat was heated to 240 °C to 246 °C. Under these conditions, 1,4-bis(4-methyl-styryl)benzene was vacuum deposited on the transparent substrate at a deposition rate of 0.5 to 1.0 nm/sec to obtain a luminescent film of 0.5 µm in thickness. In this vacuum deposition process, the substrate was at room temperature.

The substrate was taken out of the vacuum chamber. A stainless steel mask was placed on the luminescent film of the substrate, which was then attached to the substrate holder. In the electrically-heated boat, 200 mg of gold was placed, and the pressure in the vacuum chamber was decreased to 2 x $10^{-4}$ Pa. Then, the boat was heated to 1400 °C, and a 20 nm thick gold electrode was formed on the luminescent film to make a counter electrode.

Upon application of a DC voltage of 30 V to the EL element, with the gold electrode as the anode and ITO electrode as the cathode, a current of 20 mA was passed and blue green light was emitted. The maximum emission of the blue green light was observed at the wavelength of 490 nm, the wavelength range emitted by the EL element was 440 to 560 nm, and the brightness was 60 cd/$m^2$.

EXAMPLE 6

ITO was provided on a 25 mm x 75 mm x 1.1 mm glass substrate in a 50 nm thick film form by the vacuum deposition method to obtain a transparent substrate. This transparent substrate was attached to a substrate holder of a commercially available vacuum deposition system (manufactured by ULVAC Co., Ltd.), and 200 mg of 1,4-bis(4-ethylstyryl)benzene was placed in an electrically-heated boat made of molybdenum. The pressure in the vacuum chamber was decreased to 1 x $10^{-4}$ Pa and the boat was heated to 237 °C. Under these conditions, 1,4-bis(4-ethylstyryl)benzene was vacuum deposited on the transparent substrate at a deposition rate of 0.5 nm/sec to obtain a luminescent film of 0.5 µ m in thickness. In this vacuum deposition process, the substrate was at room temperature.

The substrate was taken out of the vacuum chamber. A stainless steel mask was placed on the luminescent film of the substrate, which was then attached to the substrate holder. In the electrically-heated boat, 200 mg of gold was placed, and the pressure in the vacuum chamber was decreased to 2 x $10^{-4}$ Pa. Then, the boat was heated to 1400 °C, and a 20 nm thick gold electrode was formed on the luminescent film to make a counter electrode.

Upon application of a DC voltage of 30 V to the EL element, with the gold electrode as the anode and ITO electrode as the cathode, a current of 1 mA was passed and blue green light was emitted. The maximum emission of the blue green light was observed at the wavelength of 480 nm, the wavelength range emitted by the EL element was 440 to 600 nm, and the brightness was 0.1 cd/$m^2$.

EXAMPLE 7

ITO was provided on a 25 mm x 75 mm x 1.1 mm glass substrate in a 50 nm thick film form by the vacuum deposition method to obtain a transparent substrate. This transparent substrate was attached to a substrate holder of a commercially available vacuum deposition system (manufactured by ULVAC Co., Ltd.), and 200 mg of trans-4,4′-diphenylstilbene was placed in an electrically-heated boat made of molybdenum. The pressure in the vacuum chamber was decreased to 1 x $10^{-4}$ Pa and the boat was heated to 230 °C to 245 °C. Under these conditions, trans-4,4′-diphenylstilbene was vacuum deposited on the transparent substrate at a deposition rate of 1.0 to 2.0 nm/sec to obtain a luminescent film of 0.5 μm in thickness. In this vacuum deposition process, the temperature of the substrate was 40 °C.

The substrate was taken out of the vacuum chamber. A stainless steel mask was placed on the luminescent film of the substrate, which was then attached to the substrate holder. In the electrically-heated boat, 200 mg of gold was placed, and the pressure in the vacuum chamber was decreased to 2 x $10^{-4}$ Pa. Then, the boat was heated to 1400 °C, and a 20 nm thick gold electrode was formed on the luminescent film to make a counter electrode.

Upon application of a DC voltage of 23 V to the EL element, with the gold electrode as the anode and ITO electrode as the cathode, a current of 8 mA was passed and blue light was emitted. The maximum emission of the blue light was observed at the wavelength of 465 nm, the wavelength range emitted by the EL element was 430 to 550 nm, and the brightness was 80 cd/m².

## Claims

1. An electroluminescence element in which an emitting material is made of an organic compound represented by general formula (I) :

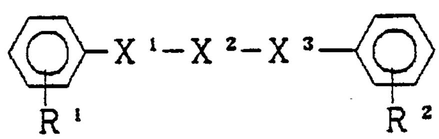

..... (I)

wherein $R^1$ and $R^2$ are independently a hydrogen or an alkyl group having 1 to 4 carbon atoms, and $X^1$, $X^2$ and $X^3$ are independently -C=C- or

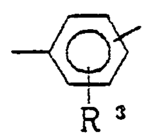

(wherein $R^3$ is a hydrogen or an alkyl group having 1 to 4 carbon atoms).

2. The electroluminescence element as claimed in Claim 1, wherein the organic compound is a compound represented by any one of the following formulae;

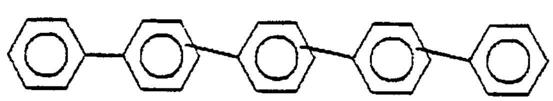

,

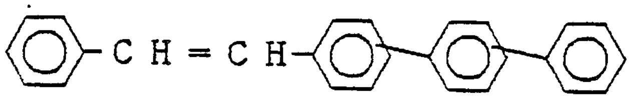

,

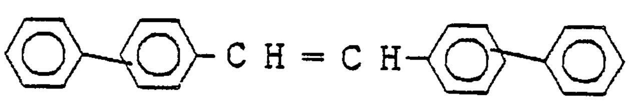

,

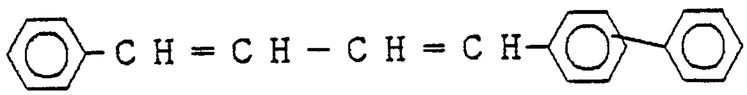 ,

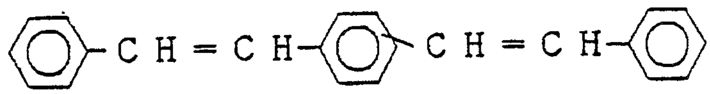 ,

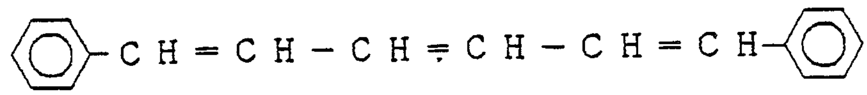

3. The electroluminescence element as claimed in Claim 1, wherein the organic compound is 1,4-bis-(alkylstyryl)benzene derivatives represented by the general formula (I′) :

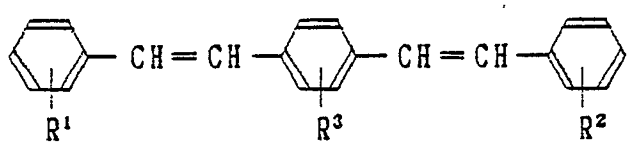 ..... (I')

4. The electroluminescence element as claimed in Claim 1, wherein the organic compound is at least one member selected from the group consisting of 1,4-bis(2-methylstyryl)benzene, 1,4-bis(3-methylstyryl)-benzene, 1,4-bis(4-methylstyryl)benzene, distyrylbenzene, 1,4-bis(2-ethylstyryl)benzene, 1,4-bis(3-ethylstyryl)benzene, 1,4-bis(2-methylstyryl)-2-methylbenzene and 1,4-bis(2-methylstyryl)-2-ethylbenzene.

5. A method for using the organic compound as defined in any one of Claims 1 to 4 as an emitting material for an electroluminescence element.

6. A thin film electroluminescence element in which a thin film of the organic compound as defined in any one of Claims 1 to 4 is sandwiched between two electrodes, at least one of which is transparent or semitransparent.

# Figure